(19) **Europäisches Patentamt**

**European Patent Office**

**Office européen des brevets**

(11) **EP 1 424 250 A2**

(12) **EUROPÄISCHE PATENTANMELDUNG**

(43) Veröffentlichungstag:
02.06.2004 Patentblatt 2004/23

(51) Int Cl.⁷: **B60R 22/48**

(21) Anmeldenummer: 03027378.3

(22) Anmeldetag: **27.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **27.11.2002 DE 10255324**

(71) Anmelder: **Cherry GmbH**
**91275 Auerbach (DE)**

(72) Erfinder:
• **Hartmann, Robert**
**72770 Reutlingen (DE)**
• **Zapf, Martin**
**95473 Creussen (DE)**

(74) Vertreter: **Molnia, David**
**Dörries Frank-Molnia Pohlman,**
**Triftstrasse 13**
**80538 München (DE)**

(54) **Vorrichtung zur Abfrage des Verriegelungszustandes eines Gurtschlosses für Fahrzeuge**

(57) Die Erfindung bezieht sich auf eine Vorrichtung zur Abfrage des Verriegelungszustandes eines Gurtschlosses für Fahrzeuge. Die Abfragevorrichtung arbeitet mit einem Sensor, der eine Induktivitäts- oder Kop- pelfaktoränderung direkt misst.

SCHNITT B-B

Fig. 3c

EP 1 424 250 A2

**Beschreibung**

Die Erfindung bezieht sich auf eine Vorrichtung zur Abfrage des Verriegelungszustandes eines Gurtschlosses für Fahrzeuge. Die Abfragevorrichtung arbeitet mit einem Sensor, der eine Induktivitäts- oder Koppelfaktoränderung direkt misst.

Aus dem Stand der Technik sind zur Erkennung des Verriegelungszustandes von Gurtschlössern zwei Prinzipien bekannt. Zum einem wurden elektromechanische Schaltkontakte verwendet, die in ihrem Aufbau einen mechanischen Gurtschlossschalter darstellen. Hierbei wird der Verriegelungszustand mit einem integrierten Mikroschalter, einem Tastschalter oder einer Taste realisiert. Solche Vorrichtungen sind z.B. aus der Deutschen Offenlegungsschrift DE 100 58 978 A1 bekannt. Zum anderen werden in neuer Zeit hauptsächlich Hallsensor mit bewegten Magneten eingesetzt. Solche Vorrichtungen sind z.B. aus dem europäischen Patent EP 0 842 832 B1, der Europäischen Patentanmeldung EP 0 861 763 A2, der PCT Anmeldung WO 99/55561, sowie der Deutschen Offenlegungsschrift DE 100 58 978 A1 bekannt. Der Verriegelungszustand wird hierbei entweder direkt oder indirekt über den Auswerfer abgefragt. Der Aufbau ist durch die Kombination von Magnet und der Bewegungseinrichtung für den Magneten, z.B. einer Druckfeder, mehrteilig.

Bei dem vorgenannten Lösungsansätzen treten prinzipbedingte Probleme auf. Die herkömmlichen Systeme sind auf Grund des Wirkprinzips empfindlich gegenüber störenden magnetischen Fremdfeldern. Befmdet sich beispielsweise ein elektrisches Gerät in der Nachbarschaft des Gurtschlosses, so kann nicht ausgeschlossen werden, dass ein störendes magnetisches Fremdfeld das Magnetfeld des Hall-Sensors überlagert oder ablenkt, der Gestalt, dass der Hall-Sensor den Zustand nicht mehr richtig erkennt.

Überdies erlauben indirekte Abfragesysteme keine eindeutige Abfrage des Zustandes des Verriegelungselementes, da sie indirekt angewendet werden. Falls aus irgendeinem Grund, z.B. Verschleiß, Ermüdung oder Verschmutzung, das Betätigungselement für den Sensor nicht funktioniert, kann der Sensor nicht den tatsächlichen Zustand erkennen. Bricht beispielsweise die Betätigung des Auswerfers für den beweglichen Magneten ab, so erkennt der Hall-Sensor einen dauerhaft geöffnetes Gurtschloss. Ermüdet die Druckfeder, so wird der bewegliche Magnet beim Entriegeln aus seiner Position befördert und der Hall-Sensor erkennt ein dauerhaft geschlossenes Gurtschloss. Ebenso wird durch das Wirkprinzip kein eindeutiger und genauer Schaltpunkt zu Verfügung gestellt.

Weiterhin sind aus dem Stand der Technik Systeme bekannt, die einen Sensor aufweisen, der die Änderung der Richtung eines Magnetfeldes als Änderung des elektrischen Widerstandes des Sensors registriert. Der magnetische Sensor verwendet einen anisotropen magnetischen Effekt und einen Hilfsmagneten. Solche Sensoren sind z.B. aus der Europäischen Patentanmeldung EP 1 125 802 A2 bekannt. Diese Systeme erfordern die Anwesenheit eines Bias- / Hilfsmagneten.

Magneten unterliegen jedoch zahlreichen Prozessen, wie z.B. Alterung, so dass die Stärke des Magneten nachlässt. Um bei störenden Magnetfeldern dennoch eine einigermaßen zuverlässige Erkennung zu gewährleisten wird die Einbringung einer magnetischen Schirmplatte vorgeschlagen.

Darüber hinaus ist der anistrope Effekt eher gering im Bereich einiger weniger Prozent (~≤5%) und abhängig von Umgebungsparametern, wie z.B. der Temperatur. Dadurch werden weitergehende Ansprüche an die Auswerteschaltung gestellt.

Die Folgen einer fehlerhaften Erkennung des Verriegelungszustandes könnte z.B. die Nichtauslösung eines Airbags im Fall eines Unfalls sein.

Aufgabe der nachfolgend beschriebenen Erfindung ist es, ein Abfragesystem zur Erkennung des Zustandes des Verriegelungselements eines Gurtschlosses zur Verfügung zu stellen, dass unempfindlich gegen starke statische magnetische Fremdfelder ist, das Verriegelungselement direkt abfragt, und sich in ein Gurtschloss integrieren lässt.

Die Aufgabe wird durch ein Abfragevorrichtung des Verriegelungselements eines Sicherheitsgurtschlosses gemäß Ansprüchen 1 und 7 gelöst.

Erfindungsgemäß wird eine Induktivitätsänderung durch Wechselwirkung eines der nachfolgend genannten Materialien mit einem Sensor bewirkt, aus der eine Aussage über den Verriegelungszustand gemacht werden kann, da die Induktivitätsänderung durch Verriegelung der Gurtzunge im Gurtschloss direkt abgefragt wird.

Zur Änderung der Induktivität können prinzipiell diamagnetische, paramagnetische als auch ferromagnetische Stoffe verwendet werden. Je nach Wahl des Materials ergeben sich unterschiedlich starke und unterschiedliche Effekte. Wird ein diamagnetisches Material verwendet, so sinkt die Induktivität. Wird ein paramagnetisches Material verwendet, so steigt die Induktivität. Bei Verwendung von ferromagneitschen Materialien steigt die Induktivität sogar stark an.

Alternativ kann auch statt der Änderung der Induktivität die Änderung des magnetischen Kopplungsfaktors $k$ zweier verkoppelter Spulen verwendet werden. Der Kopplungsfaktor $k$ beschreibt dabei das Verhältnis der magnetischen Kopplungen zwischen zwei elektrischen Schaltkreisen 1 und 2. Für den Kopplungsfaktor zwischen zwei elektrischen Schaltkreisen mit den Induktivitäten $L_1$ und $L_2$ und der Gegeninduktivität $M_{12}$ gilt die folgende Formel.

$$k = \frac{M_{12}}{\sqrt{L_1 L_2}}$$

Zur Änderung des Kopplungsfaktors $k$ können prinzipiell diamagnetische, paramagnetische als auch ferromagnetische Stoffe verwendet werden. Je nach Wahl des Materials ergeben sich unterschiedlich starke und unterschiedliche Effekte. Wird ein diamagnetisches Material verwendet, so steigt der Kopplungsfaktor *k*. Wird ein paramagnetisches Material verwendet, so sinkt der Kopplungsfaktor k. Bei Verwendung von ferromagneitschen Materialien sinkt der Kopplungsfaktor *k* sogar stark ab.

Die vorbeschriebenen Wirkungen sind dabei statischer Natur und ermöglichen daher eine präzise Zustandserkennung.

Anhand der Zeichnung wird die Erfmdung nachstehend eingehend erläutert. Im folgenden zeigt:

Fig. 1 ein verriegeltes Sicherheitsgurtschloss aus dem Stand der Technik;

Fig. 2 ein entriegeltes Sicherheitsgurtschloss aus dem Stand der Technik;

Fig. 3 eine Ausführungsform eines erfindungsgemäßes verriegeltes Sicherheitsgurtschloss, wobei

•Fig. 3a einen Seitenansicht,
•Fig. 3b eine Aufsicht mit der Schnittlinie B-B und
•Fig. 3c eine Seitenansicht entlang der Schnittlinie B-B ist;

Fig. 4 eine Ausführungsform eines erfindungsgemäßes entriegeltes Sicherheitsgurtschloss, wobei

•Fig. 4a einen Seitenansicht,
•Fig. 4b eine Aufsicht mit der Schnittlinie A-A und
•Fig. 4c eine Seitenansicht entlang der Schnittlinie A-A ist;

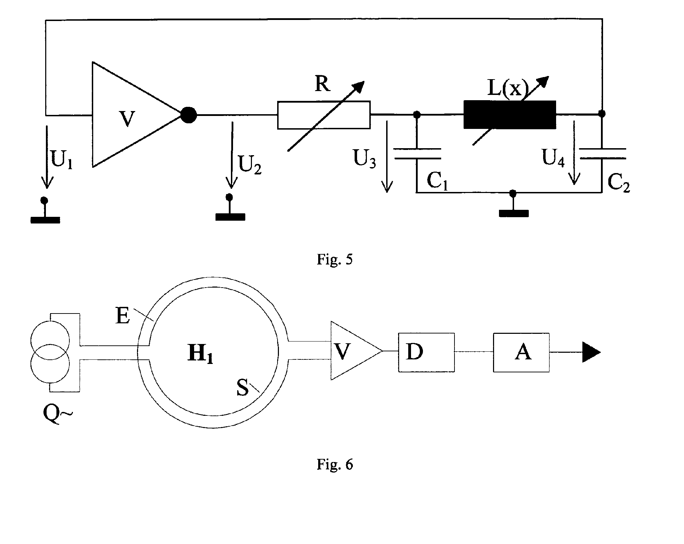

Fig. 5 eine Sensorschaltung nach dem Oszillatorprinzip;

Fig. 6 eine Ausführungsform einer Sensorschaltung;

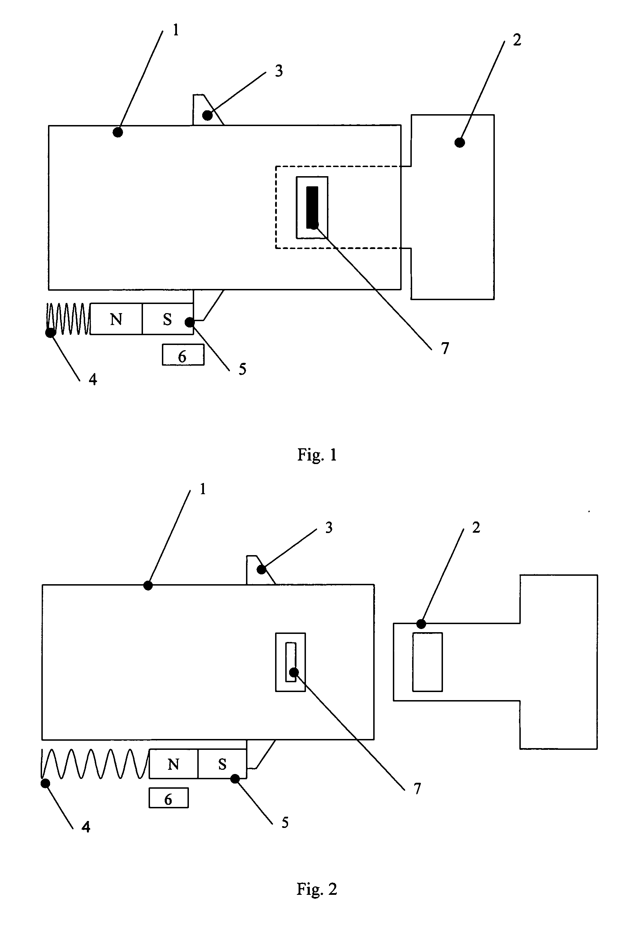

Aus der Darstellung gemäß Fig. 1 und Fig. 2 ist die Wirkweise eines Sicherheitsgurtschloss aus dem Stand der Technik ersichtlich. Im folgenden wird zuerst der verriegelte Zustand in Fig. 1 beschrieben.

Das Gurtschloss besteht aus einem Gurtschlossträger (1) und einer Gurtschlosszunge (2). Der Gurtschlossträger (1) weist einen integrierten Auswerfer (3) und ein Verriegelungselement (7) auf. Zwischen dem Auswerfer (3) und einer Druckfeder (4) befindet sich ein beweglicher Magnet (5). Der Magnet (5) ist so angeordnet, das seine Position gegenüber einem geeignet angebrachten Hall-Sensor (6) mittels des Auswerfer (3) und der Druckfeder (4) verändert werden kann.

Zum Verriegeln wird die Gurtschlosszunge (2) in den Gurtschlossträger (1) gemäß Fig. 1 eingeführt. Gleichzeitig wird damit die Position des Auswerfers (3) verändert. Das Verriegelungselement (7) verriegelt sich. Der Auswerfer (3) wiederum verändert die Position des beweglichen Magneten (5), der nun gegen die Federkraft der Druckfeder (4) bewegt wird. Diese Positionsänderung des beweglichen Magnets (5) erkennt ein geeignet angeordneter Hall-Sensor (6) als Felddichtenänderung und erzeugt ein elektrisches Ausgangssignal, welches den Verriegelungszustand signalisiert.

Wird das Verriegelungselement (7) entriegelt, so kann die Gurtschlosszunge (2) aus dem Gurtschlossträger (1) gemäß Fig. 2 herausgezogen werden. Eine in den Figuren nicht dargestellte Druckfeder verändert die Position des Auswerfers (3). Weiterhin verändert die gespannte Druckfeder (4) die Position des beweglichen Magneten (5). Ein geeignet angeordneter Hall-Sensor (6) erkennt diese Positionsänderung des beweglichen Magnets (5) als Felddichtenänderung und erzeugt ein elektrisches Ausgangssignal, welches den Entriegelungszustand signalisiert.

Dieses Ausgangssignal kann in einem geeigneten Steuergerät weiter verarbeitet werden.

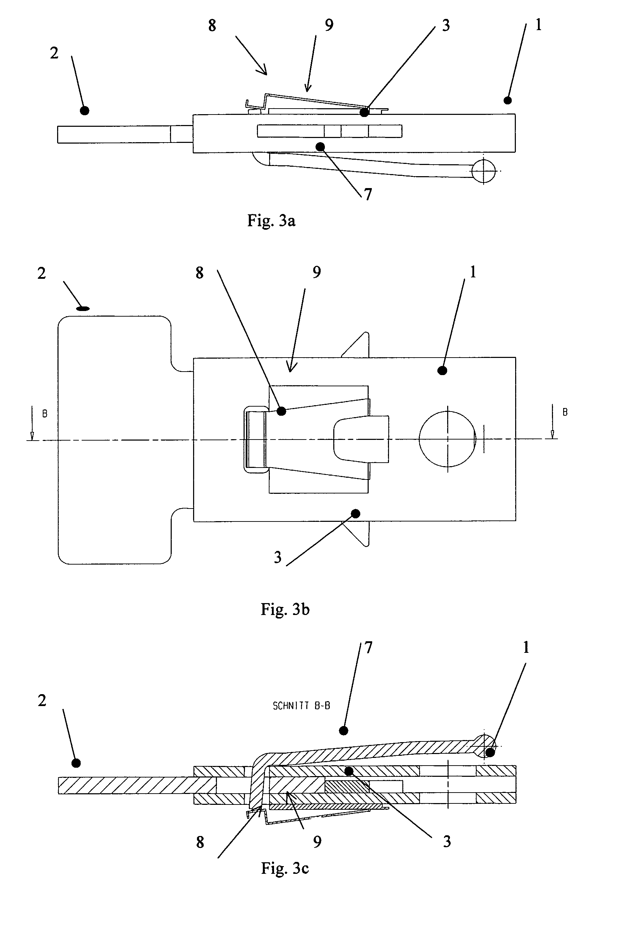

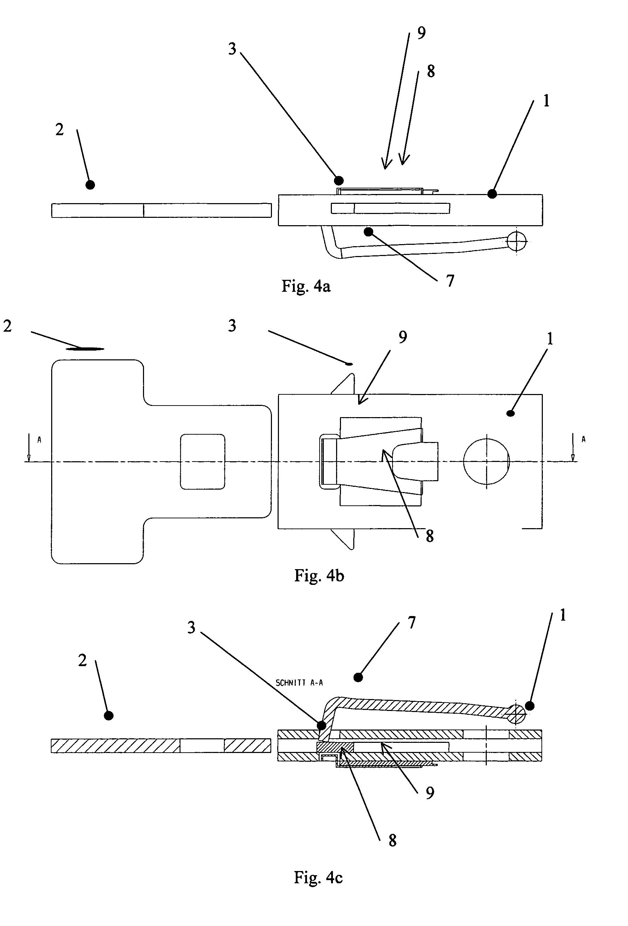

Im folgenden wird eine erfindungsgemäße Vorrichtung zur Erkennung des Zustandes eines Gurtschloss entsprechend den Fig. 3a - 3c und Fig. 4a - 4c beschrieben. Die vorliegende Erfindung löst die vorgenannten Probleme durch Verwendung eines Sensors zur direkten Abfrage des Zustandes eines Gurtschloss. Insbesondere lassen sich mit der Vorrichtung genaue Schaltpunkte zu realisieren und lassen sich die Kosten minimieren.

Eine erfindungsgemäße Ausführungsform des Gurtschlosses besteht aus einem Gurtschlossträger (1) und einer Gurtschlosszunge (2). Der Gurtschlossträger (1) weist einen integrierten Auswerfer (3), ein Verriegelungselement (7), eine Blattfeder (8), sowie einen Sensor (9) auf. Der Sensor (9) ist z.B. eine gedruckte Schaltung, welche so angeordnet ist, das die Position der Gurtschlosszunge (2) gegenüber dem Sensor (9) verändert werden kann.

Weiterhin besteht entweder das Verriegelungselement (7) oder die Blattfeder (8) oder beide aus einem entsprechenden, die Induktivität oder den Kopplungsfaktor verändernden, Material.

Im folgenden wird die Vorrichtung an Hand einer Induktivitätsänderung beschrieben.

Zum Verriegeln wird die Gurtschlosszunge (2) in den Gurtschlossträger (1) einer erfindungsgemäße Ausführungsform eines Gurtschloss gemäß Fig. 3a-3c eingeführt. Das Verriegelungselement (7) verriegelt sich und die Blattfeder (8) wird vom Sensor (9) weg bewegt wie in Fig. 3c gezeigt. Diese Positionsänderung der Blattfeder (8) wird vom Sensor (9) erkannt und eine geeignete Auswerteschaltung erzeugt ein elektrisches Ausgangssignal, welches den Verriegelungszustand signalisiert.

Wird das Verriegelungselement (7) entriegelt, so kann die Gurtschlosszunge (2) aus dem Gurtschlosssträger (1) gemäß Fig. 4a-4c herausgezogen werden. Die gespannte Blattfeder (8) bewegt sich auf den Sensor (9) zu, wie in Fig. 4c gezeigt. Diese Positionsänderung der Blattfeder (8) wird vom Sensor (9) erkannt und eine geeignete Auswerteschaltung erzeugt ein elektrisches Ausgangssignal, welches den Verriegelungszustand signalisiert.

Das elektrische Ausgangssignal kann in einem geeigneten Steuergerät weiter verarbeitet werden.

Im folgenden wird ein erfindungsgemäßer Sensoraufbau erläutert.

In einer besonders bevorzugten Ausführungsform wird, wie in Fig. (5) dargestellt, ein planarer induktiven Sensor L(x) auf einer Leiterplatte aufgebracht. Die Induktivität ist als mehrwindigen Leiterschleife planar auf einer gedruckten Schaltung aufgebracht. Solche Sensoren sind z.B. in der Deutschen Patentanmeldung 102 423 85 der Anmelderin beschrieben. Hierbei ändert sich die Induktivität L in Abhängigkeit des Abstandes x eines geeigneten Betätigungselementes zur Induktivität L. In der vorliegenden Erfmdung wird über das Verriegelungselement (7) die Blattfeder (8) betätigt. Je nach Position x der Blattfeder (8) relativ zur Sensor (9) ändert sich nun die Induktivität L der Sensor 9.

Der Sensor (9) wird dabei zwischen dem Gurtschlossträger (1) und der Blattfeder (8) angeordnet und mit dem Träger verbunden. Der Gurtschlossträger (1) selbst weist an der Position des Sensors sowie in geringem Abstand von z.B. 2 mm relativ zur Fläche des Sensors (9) eine Aussparung auf, wodurch induktiven Kreisströme unterdrückt werden können.

Das Signal des Sensors (9) kann nun in einer im folgenden beschriebenen Auswerteschaltung verarbeitet werden.

Die Änderung der Induktivität L(x) kann z.B. durch eine einfache LC-Oszillatorschaltungen ausgewertet werden. Eine solche Schaltung ist schematisch in Fig. (5) dargestellt und weist einen invertierenden Verstärker V, einen Widerstand R, zwei Keramikkondensatoren $C_1$ und $C_2$, sowie die Induktivität L(x) auf. Die Induktivität ist z.B. als gedruckte Schaltung mit einer unbedämpften Induktivität von 1 μH realisiert. Hierbei bilden die Kondensatoren $C_1$ und $C_2$ sowie die Induktivität L(x) ein π-Glied, und der Ausgang des π-Gliedes wird auf den invertierenden Verstärker V zurückgekoppelt.

Solche LC-Oszillatorschaltungen müssen eine Amplituden- und eine Phasen - Bedingungen erfüllen (Vgl. Tietze/Schenk: Halbleiter-Schaltungstechnik; Springer Verlag, Berlin, 10. Auflage Kapitel 15.1 ff) damit die Oszillatorschaltung zum einen anschwingt und zum anderen stabil weiterschwingt:

> 1. Die Schleifenverstärkung der gesamten Schaltung muss größer als eins sein.
> 2. Die Spannung $U_4$ muss selbst bei unterbrochenem Rückkoppelzweig gleichphasig mit der Spannung $U_1$ sein.

Man nennt die erste Bedingung die Amplitudenbedingung und die zweite Bedingung die Phasenbedingung der Oszillatorschaltung.

Im Resonanzfall des π-Gliedes sind die Spannungen $U_3$ und $U_4$ gegenphasig. Der invertierende Verstärker V verschiebt die Spannung bei geschossenem Rückkoppelzweig nochmals um 180°, und damit sind bei geringem Widerstand R die Spannungen $U_2$ und $U_3$ in Phase. Somit ist die Phasenbedingung ist erfüllt.

Bei geringem Widerstand R, einer Verstärkung V, die größer als 2 ist, und bei einem ausreichend großem Eingangswiderstand des invertierenden Verstärkers ist auch die Amplitudenbedingung erfüllt.

Die Amplitude der Spannung $U_2$ wir durch den invertierenden Verstärker V um den Faktor "-V" gegenüber der Amplitude der Spannung $U_1$ verstärkt. Ist die Kreisgüte des π-Gliedes hoch, so sind die Amplituden der Spannungen $U_3$ und $U_4$ annähernd gleich. Wenn der Widerstand R gering ist, so ist auch der Spannungsabfall über den Widerstand R klein und damit ist die Amplitude der Spannung $U_2$ größer als die Amplitude der Spannung $U_3$.

Durch Erhöhung des Widerstandwertes R können die Schwingungsbedingungen des Oszillatorschaltung verletzt werden.

Der Widerstand R und der Kondensator $C_1$ bilden ein RC - Glied. Durch Erhöhung des Widerstandwertes R entsteht hierdurch zwischen den Spannungen $U_2$ und $U_3$ ein zusätzlicher Phasenverschiebung. Erreicht die Phasenverschiebung eine gewisse Größe, so wird die Phasenbedingung verletzt und die Oszillation bricht ab. Dieser Punkt wird spätestens dann erreicht, wenn die Spannungen $U_1$ und $U_4$ bei unterbrochener Rückkoppelung in die Gegenkopplung laufen.

Ebenso wird durch ein höheren wert des Widerstandes R ein höherer Spannungsabfall am Widerstand R hervorgerufen. Die Amplitude der Spannung $U_3$ sinkt. Sinkt das Verhältnis der Spannungsamplituden $U_2$ zu $U_3$ unter den Verstärkungsgrad V, so sinkt die Schleifenverstärkung unter 1 und damit wird die Amplitudenbedingung verletzt.

In einer Ausführungsform der Oszillatorschaltung wird der Widerstand R bei geschlossenem Gurtschloss (1) so eingestellt, dass der Oszillator stabil schwingt. Wird das Gurtschloss (1) geöffnet, nähert sich die Blattfeder dem Sensor an und die Induktivität L(x) wird dabei verringert. Die Resonanzfrequenz des π-Gliedes steigt. Der Oszillator schwingt auf einer höheren Frequenz.

Die Änderung der Frequenz des Oszillators kann zur Auswertung des Verriegelungszustandes eines Gurtschlosses verwendet werden. Wird beispielsweise ein Mikrocontroller (μC) an den Ausgang des π-Gliedes angeschlossen, so kann die Frequenz der Spannung $U_4$ gemessen werden. Hierbei wird eine Schwelle festgelegt die zwischen den Zuständen "geschlossen" und "geöffnet" des Gurtschlosses liegt. Ändert sich die Frequenz über diese Schwelle, signalisiert der Mikrocontroller dies über einen Datenbus oder über ein anderes geeignetes analoges Signal.

In einer weiteren, besonders bevorzugten Ausführungsform der Oszillatorschaltung wird der Zustand des Gurtschlosses über den Zustand der Oszillation ausgewertet.

Durch eine Frequenzerhöhung erhöht sich auch die Phasenverschiebung des RC - Gliedes. Hierdurch wird bei geeigneter Dimensionierung die Phasenbedingung der Oszillatorschaltung nicht mehr erfüllt und die Schwingung bricht ab.

Weiterhin kann durch geeignete Dimensionierung der Bauteile kann das Abreißen der Schwingung durch die Nichterfüllung der Amplitudenbedingung hervorgerufen werden.

Werden Invertern mit einer frequenzabhängige Verstärkung verwendet, wie z. B Inverter der Baureihe 74HCU04, so fällt die Verstärkung bei Frequenzen oberhalb von 12 MHz stark ab.

Nähert sich die Blattfeder (8) dem Sensor (9) an, so erhöht sich beispielsweise die Frequenz stark. Da die Frequenz stark steigt fällt die Verstärkung stark ab. Bei einem geeignet groß dimensionierten Widerstand R wird die Schleifenverstärkung kleiner als 1, und die Schwingung reißt ab.

Durch eine einfache nachgeschaltete Differenziererschaltung kann erkannt werden, ob der Oszillator noch schwingt. Der Zustand der Oszillation und damit des Gurtschlosses (1) kann dann z.B. über eine LED angezeigt, einen Warntongemeldet oder aber durch ein digitales Signal an eine Steuerung weitergegeben werden.

Die vorgenannten Schaltungen stellen bezüglich der Änderung der Induktivität ein Eintor dar.

In einer weitem alternativen Ausführungsform des Sensors (9) kann auch, wie in Fig. (6) schematisch dargestellt und in der Deutschen Patentanmeldung DE 101 25 278 der Anmelderin beschrieben, statt der Änderung der Induktivität auch die Änderung des magnetischen Kopplungsfaktors zweier verkoppelter planar aufgebrachter Spulen durch die Annäherung der Blattfeder (8) realisiert werden. Diese Schaltung stellt bezüglich der Änderung der Induktivität ein Zweitor dar.

Eine entsprechende Sensorschaltung weist folgende in Fig. (6) dargestellten Komponenten auf: eine Hochfrequenzstromquelle Q~ , eine Erregerspule E, eine Sensorspule S, einen Verstärker V, einen Amplitudendetektor D und einen Regler A.

Die Stromquelle Q~ erzeugt einen hochfrequenten Wechselstrom, der durch die Erregerspule E geleitet wird. Dieser Wechselstrom erzeugt ein Magnetfeld $H_1$, das in der Sensorspule S eine Induktionsspannung induziert. Die Amplitude der Spannung ist unter anderem vom Kopplungsfaktor abhängig. Diese Induktionsspannung wird von einem Verstärker V verstärkt und an den Amplitudendetektor D weitergeleitet. Der Amplitudendetektor D erzeugt ein Gleichspannungssignal, das bis auf einen Offset der Amplitude der Induktionsspannung entspricht. Dieses Gleichspannungssignal wird vom Regler A weiter ausgewertet. Sinkt das Gleichspannungssignal unter einen bestimmten Wert, so ist das Gurtschloss geöffnet.

Beispielsweise kann die Hochfrequenzstromquelle Q~ einen Strom von ca. 2 mA bei einer Frequenz von 12 MHz liefern. In der Sensorspule S werden dann z.B. 100 $mV_{pp}$ induziert. Der Regler A kann z.B. durch ein Schaltregler realisiert werden, der das Absinken des Gleichspannungssignals unter einen bestimmten Schwellwert über einen Bus oder über ein analoges Signal anzeigt. Der Sensor kann aus zwei mehrwindige Leiterschleifen E und S aufgebaut sein, wobei die Leiterschleifen konzentrisch, bifilar und planar auf einer gedruckten Schaltung aufgebracht sind.

Wird das Gurtschloss (1) geöffnet, befindet sich die Blattfeder (8) in geringem Abstand zur Leiterplatte mit dem Sensor (9) und dämpft die induktive Kopplung von Erreger und Sensorspule. Dadurch sinkt die Induktionsspannung. Dies führt zu einer geringeren Gleichspannung am Ausgang des Amplitudendetektors D und zu einem Umschalten des Reglers A.

Die vorbeschriebenen Ausführungsformen des Sensors als auch geeigneter Auswerteschaltungen dienen der Illustration. Weiter Ausführungsformen zur Verwendung des induktiven Prinzips, Variationen der Materialien, als auch geeigneter Auswerteschaltungen erschließen sich dem Fachmann sofort.

Bezugszeichenliste

| | |
|---|---|
| 1 | Gurtschlossträger |
| 2 | Gurtschlosszunge |
| 3 | Auswerfer |
| 4 | Druckfeder |
| 5 | Beweglicher Magnet |
| 6 | Hall-Sensor |
| 7 | Verriegelungselement |
| 8 | Blattfeder |
| 9 | Sensor |
| V | Verstärker |
| R | Widerstand |
| C | Kondensator ($C_1$, $C_2$) |
| L(x) | Induktivität |
| Q~ | Hochfrequenzstromquelle |
| E | Erregerspule |
| S | Sensorspule |
| D | Amplitudendetektor |
| A | Regler |

**Patentansprüche**

**1.** Vorrichtung zur Erkennung des Verriegelungszustandes eines Gurtschlosses mit einem Sensor (6), **dadurch gekennzeichnet, dass** der Sensor (6) den Verriegelungszustand des Gurtschlosses durch Änderung der Induktivität direkt abfragt.

2. Vorrichtung nach Anspruch 1, **dadurch gekennzeichnet, dass** der Sensor (6) aus einer mehrwindigen Leiterschleife aufgebaut ist.

3. Vorrichtung nach Anspruch 2, **dadurch gekennzeichnet, dass** die Leiterschleife auf einer gedruckten Schaltung aufgebracht ist.

4. Vorrichtung nach Anspruch 2 oder 3, **dadurch gekennzeichnet, dass** die Leiterschleife planar ist.

5. Vorrichtung nach einem der vorhergehenden Ansprüche, **dadurch gekennzeichnet, dass** die Vorrichtung eine Auswerteschaltung aufweist, die einen Oszillator-Schwingkreis umfasst.

6. Vorrichtung nach Anspruch 5, **dadurch gekennzeichnet, dass** der Oszillator-Schwingkreis weiterhin eine Differenzierschaltung zur Erkennung einer Oszillation aufweist.

7. Vorrichtung nach Anspruch 5, **dadurch gekennzeichnet, dass** der Oszillator-Schwingkreis mittel eines Mikrocontrollers ausgewertet wird.

8. Vorrichtung zur Erkennung des Verriegelungszustandes eines Gurtschlosses mit einem Sensor (6), **dadurch gekennzeichnet, dass** der Sensor (6) den Verriegelungszustand des Gurtschlosses durch Änderung des Kopplungsfaktor direkt abfragt.

9. Vorrichtung nach Anspruch 8, **dadurch gekennzeichnet, dass** der Sensor (6) aus zwei mehrwindige Leiterschleifen aufgebaut ist.

10. Vorrichtung nach Anspruch 9, **dadurch gekennzeichnet, dass** die mehrwindige Leiterschleifen konzentrisch und bifilar aufgebaut sind.

11. Vorrichtung nach Anspruch 9 oder 10, **dadurch gekennzeichnet, dass** die Leiterschleifen auf einer gedruckten Schaltung aufgebracht sind.

12. Vorrichtung nach Anspruch 10 oder 11, **dadurch gekennzeichnet, dass** die Leiterschleifen planar sind.

13. Vorrichtung nach einem der vorhergehenden Ansprüche, **dadurch gekennzeichnet, dass** die Vorrichtung eine Blattfeder (8) aufweist, die aus einem Material ausgewählt aus der Gruppe diamagnetisch, paramagnetisch, ferromagnetisch hergestellt ist.

14. Vorrichtung nach einem der vorhergehenden Ansprüche, **dadurch gekennzeichnet, dass** der Sensor (6) Teil eines Spannungsübertragungskreises ist.

15. Vorrichtung nach Anspruch 14, **dadurch gekennzeichnet, dass** die Vorrichtung weiterhin eine Schaltreglerschaltung zur Erkennung einer Spannung aufweist.

16. Gurtschloss aufweisend einen Gurtschlossträger (1), eine Gurtschlosszunge (2), einen Auswerfer (3), ein Verriegelungselement (7) und eine Vorrichtung zur Erkennung des Verriegelungszustandes eines Gurtschlosses gemäß einem der vorhergehenden Ansprüche.

17. Gurtschloss nach Anspruch 16, **dadurch gekennzeichnet, dass** die Gurtschlosszunge (2) aus einem Material ausgewählt aus der Gruppe diamagnetisch, paramagnetisch, ferromagnetisch hergestellt ist.

Fig. 1

Fig. 2

Fig. 3a

Fig. 3b

SCHNITT B-B

Fig. 3c

Fig. 4a

Fig. 4b

SCHNITT A-A

Fig. 4c

Fig. 5

Fig. 6